# EUROPEAN PATENT APPLICATION

(11) **EP 3 168 706 A1**
(43) Date of publication of application: **17.05.2017**
(21) Application number: 16198362.2
(22) Date of filing: 11.11.2016
(51) Int. Cl.: G05D 1/10

(54) **AUTOMATED CONTROL USING SIMULATED SIGNALS**

(30) Priority: 12.11.2015 US 201514939214
(71) Applicant: Hamilton Sundstrand Corporation, Charlotte, NC 28217-4578 (US)
(72) Inventor: NOLL, Christopher, Glastonbury, CT 06033 (US); AVRITCH, Steven A., Bristol, CT 06010 (US)
(74) Representative: Hughes, Andrea Michelle

(57) **Abstract**

A method for controlling a vehicle is provided. The method includes generating a digital control signal, generating a digital simulated signal based on the control signal, the digital simulated signal simulating one of a mechanical or analog input signal, converting the digital simulated signal into an analog signal, and controlling a control device of the vehicle using the analog signal.

## Description

### BACKGROUND

The subject matter disclosed herein generally relates to control logic and controllers and, more particularly, to providing automated control using simulated signals.

A flight control system or Vehicle Management System provides a control linkage between control input mechanisms, such as a control stick, a computer controller, etc. and a control device, such as an actuator for a control surface or a valve or other component that controls a fluid line or the like (e.g., throttle). A flight control system is designed and implemented in accordance with certain specifications that ensure a very high level of reliability, redundancy, and safety.

In one example of a control system for a vehicle, a fly-by-wire system translates an aircraft pilot's commands into electrical signals by transducers coupled to a control stick or other manual controller. The electrical signals are interpreted by redundant flight control computers (FCC). In flight, the flight control computers perform multiple digital or analog processes that combine inputs with measurements of an aircraft's movements (e.g., from various sensors) to determine how to direct the control surfaces or devices. For example, when a pilot adjusts or moves a control stick related to a throttle, an electrical signal may be generated in response to the mechanical action of the control stick, and the electrical signal may be processed to adjust a throttle on an engine of an aircraft.

In some instances, a man-rated aircraft may be re-used and/or retrofitted and configured for uses that do not require a pilot or on-board crew. This type of aircraft, known as an Unmanned Air Vehicle (UAV) is modified to take advantage of the existing systems by replacing the functionality typically provided by a pilot. In some instances, the flight control system may be changed, altered, and configured in order to allow control by a ground controller, i.e., a controller that is remote from the vehicle or aircraft. Alternatively, in some instances, conversion is implemented by modifying flight control processor logic to merge external sensor signals and commands into the control surface commands that drive the UAV.

An unmanned system developed using components that were developed for manned operation require certain interfaces previously controlled by the pilot to be controlled by the vehicle management system or flight control computer. An example of such a component is an engine throttle command that is sent to a full authority digital electronics control (FADEC). In some instances, using an existing FADEC without changing the baseline hardware, software, or functionality of the FADEC may be advantageous. Such existing or legacy FADECs receive throttle input via a linear or rotary variable differential transformer (L/RVDT) or resolver connected to a throttle mechanism that is operated by a pilot.

### SUMMARY

According to some embodiments, methods for controlling a vehicle are provided. The methods include generating a digital control signal, generating a digital simulated signal based on the control signal, the digital simulated signal simulating one of a mechanical or analog input signal, converting the digital simulated signal into an analog signal, and controlling a control device of the vehicle using the analog signal.

In addition to one or more of the features described herein, or as an alternative, further embodiments of the method may include transmitting the analog signal to a FADEC.

In addition to one or more of the features described herein, or as an alternative, further embodiments of the method may include that the control device is a throttle of an aircraft.

In addition to one or more of the features described herein, or as an alternative, further embodiments of the method may include that the digital simulated signal comprises a first simulated signal and a second simulated signal.

In addition to one or more of the features described herein, or as an alternative, further embodiments of the method may include that the first simulated signal is a simulated signal of a first coil of an LVDT, RVDT, or resolver and the second simulated signal is a simulated signal of a second coil of the LVDT, RVDT, or resolver.

According to other embodiments, control systems configured to control a control device of a vehicle are provided. The control systems include a processor configured to output a control signal and a simulator configured to convert the control signal to a simulated signal, the simulated signal simulating one of a mechanical or analog input signal. The simulated signal is used to control the control device of the vehicle.

In addition to one or more of the features described herein, or as an alternative, further embodiments of the systems may include that the simulator comprises an integrated circuit for converting the control signal into a digital simulated signal and at least one digital-to-analog converter configured to convert digital simulated signal into an analog signal.

In addition to one or more of the features described herein, or as an alternative, further embodiments of the systems may include that the processor and the simulator are part of a flight control computer or vehicle management system.

In addition to one or more of the features described herein, or as an alternative, further embodiments of the systems may include a FADEC configured to receive the simulated signal from the simulator.

In addition to one or more of the features described herein, or as an alternative, further embodiments of the systems may include that the control device is a throttle of an aircraft.

In addition to one or more of the features described herein, or as an alternative, further embodiments of the systems may include that the simulated signal comprises a first simulated signal and a second simulated signal.

In addition to one or more of the features described herein, or as an alternative, further embodiments of the systems may include that the first simulated signal is a simulated signal of a first coil of an LVDT, RVDT, or resolver and the second simulated signal is a simulated signal of a second coil of the LVDT, RVDT, or resolver.

According to other embodiments, vehicle management systems are provided. The vehicle management systems include a control device configured to control a portion of a vehicle and a control computer. The control computer includes a processor configured to output a control signal related to the control device and a simulator configured to convert the control signal to a simulated signal, the simulated signal simulating one of a mechanical or analog input signal for the control device. The simulated signal is used to control the control device of the vehicle.

In addition to one or more of the features described herein, or as an alternative, further embodiments of the vehicle management systems may include a FADEC operationally connecting the control computer and the control device.

In addition to one or more of the features described herein, or as an alternative, further embodiments of the vehicle management systems may include that the simulator comprises an integrated circuit for converting the control signal into a digital simulated signal and at least one digital-to-analog converter configured to convert digital simulated signal into an analog signal.

In addition to one or more of the features described herein, or as an alternative, further embodiments of the vehicle management systems may include that the control device is a throttle of an aircraft.

In addition to one or more of the features described herein, or as an alternative, further embodiments of the vehicle management systems may include that the simulated signal comprises a first simulated signal and a second simulated signal.

In addition to one or more of the features described herein, or as an alternative, further embodiments of the vehicle management systems may include that the first simulated signal is a simulated signal of a first coil of an LVDT, RVDT, or resolver and the second simulated signal is a simulated signal of a second coil of the LVDT, RVDT, or resolver.

Technical effects of embodiments of the present disclosure include a control system configured to automatically operate a control device using simulated signals. Further technical effects include a control system that eliminates mechanical inputs and replaces such inputs with simulated signals to provide control in a vehicle.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic illustration of a control system in accordance with a non-limiting embodiment of the present disclosure;
FIG. 2 is a schematic illustration of another control system in accordance with a non-limiting embodiment of the present disclosure;
FIG. 3 is a flow process of controlling a vehicle in accordance with a non-limiting embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

In some legacy or existing, i.e., manual input, systems, manual input may be provided to a control system that converts the manual inputs into signals that are provided to control devices for operation of a vehicle. For example, a FADEC may be configured to receive throttle inputs from one or more LVDT, RVDT, or resolver inputs, i.e., analog inputs, in response to action or operation by a pilot of an aircraft. That is, in a manual input system, a mechanical linkage may connect an input device to an LVDT, RVDT (linear or rotational variable differential transformer), or resolver that is configured to measure a displacement distance or rotation of the input device. The input device may be a stick, pedal, or other input device that is manually controlled by a user, such as a pilot. The LVDT, RVDT, or resolver measures the displacement or rotation and sends an electrical signal to a FADEC which in turn controls a throttle of an engine (or controls some other operation of the vehicle, e.g., control surfaces, fluid lines, flaps, etc.) based on the measured displacement or rotation. Traditionally, in the LVDT, RVDT, or resolver, electromagnetic coils are employed to measure the displacement and generate a corresponding electrical signal that is transmitted to the FADEC. For example, two coils, e.g., a first coil and a second coil, may each generate a signal that represents a percentage or ratio, such that two signals are used by the FADEC to control the control device.

As described herein, the manual inputs (e.g., the measured displacement at the coils of the LVDT, RVDT, or resolver) are replaced by simulated signals or inputs such that appropriate and automated throttle control, or other control, is provided to a vehicle, thus enabling unmanned control and operation of the vehicle. That is, in accordance with embodiments described herein, a position sensing analog input may be replaced with simulated signals. For example, in the case of a throttle on an aircraft, the LVDT, RVDT, or resolver may be eliminated from the control system and replaced with simulated signals that are designed to simulate the operation and measurements of the coils of an LVDT, RVDT, or resolver.

As described herein, a flight control computer (FCC) or vehicle management system (VMS) provides simulated AC signals for A and B coils to the FADEC via analog outputs. Software/firmware in the FCC/VMS controls the amplitude of the A and B coils to provide an equivalent ratio as well as constant sum to command the desired throttle input command. In alternative embodiments, depending on the demodulation scheme used by the FADEC, this can also be accomplished via DC inputs. That is, a FCC or other computer controller is configured to generate signals having appropriate amplitude, ratio, and constant sum to replicate the signals generated by coils of an LVDT, RVDT, or resolver.

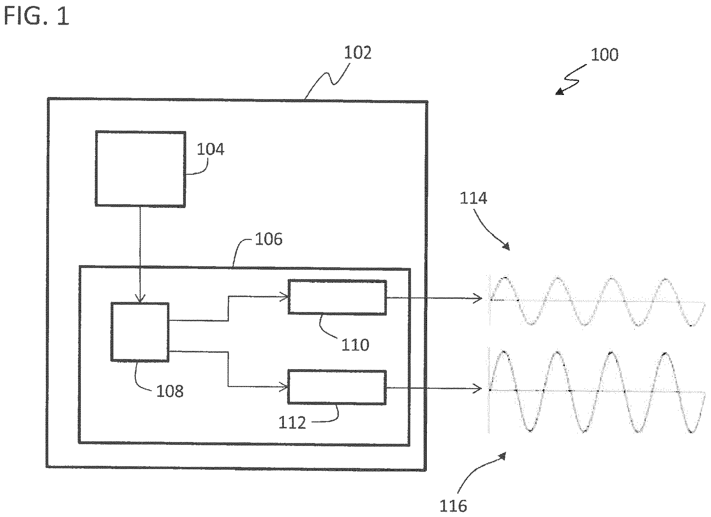

FIG. 1 is a schematic illustration of a control system 100 in accordance with a non-limiting embodiment of the present disclosure. The control system 100 may be configured to control one or more control devices or control surfaces. That is, the control system 100 is configured to receive or generate input signals and convert the input signals into control commands and signals that may be sent to various control devices to operate an aircraft. As described herein, the non-limiting embodiment of FIG. 1 is shown and described with respect to controlling a throttle of an aircraft, although those of skill in the art will appreciate that the disclosure is not limited thereto, and other control devices and/or vehicles may employ embodiments disclosed herein.

Control system 100 includes a control computer 102 which, in some embodiments, is a flight control computer (FCC) or vehicle management system (VMS). The control computer 102 includes a processor 104, such as a CPU or other computer processor, as known in the art. The processor 104 is configured to output a signal to a simulator 106. The simulator 106 may be configured to replace a mechanical control signal with a digital control signal. For example, the simulator 106 may replace a mechanical throttle control with a simulated, digital throttle signal. In such configurations, the simulator 106 may provide a simulated LVDT, RVDT, or resolver simulation function. As shown, the simulator 106 may include an integrated circuit 108, such as a field-programmable gate array, a first digital-to-analog converter 110 and a second digital-to-analog converter 112. Although described with specific components, those of skill in the art will appreciate that the control system 100 may include other components and perform other functions without departing from the scope of the present disclosure.

In operation, the processor 104 is configured to output a throttle command which is received by the integrated circuit 108 of the simulator 106. The integrated circuit 108 converts the throttle command into a ratio or percentage for two signals, such as a simulated first coil and a simulated second coil of a simulated LVDT, RVDT, or resolver. Such converted ratio or percentage based on the throttle command from the processor 104 may simulate a corresponding or appropriate position of a mechanical throttle controller based on the throttle command of the processor 104. That is, the processor 104 outputs a signal that is equivalent to a pilot operating an input device (e.g., a control stick) and the integrated circuit 108 converts this to a simulated signal.

The output from the integrated circuit 108 is a digital signal that simulates ratios of an analog displacement device (e.g., an LVDT, RVDT, or resolver). The digital signals from the integrated circuit 108 are converted to analog signals by a first digital-to-analog converter 110 and a second digital-to-analog converter 112 such that analog signals may be output from the control computer 102. For example, the first digital-to-analog converter 110 may output a first analog signal 114 that is equivalent to a first coil of an LVDT, RVDT, or resolver. Similarly, the second digital-to-analog converter 112 may output a second analog signal 116 that is equivalent to a second coil of an LVDT, RVDT, or resolver. The two analog signals 114, 116 may then be supplied to a FADEC, which in turn controls a throttle of an engine. That is, although no analog or mechanical input is provided, the control system 100 may output analog signals that operate the same as other systems, but are generated based on simulated signals.

Thus, the control system 100 may eliminate a mechanical control device and yet provide an analog signal to a throttle or other control device. That is, in accordance with the present disclosure, and employing a control system 100 as described above, a throttle or other control device that requires analog inputs may be controlled by a control system that operates using simulated signals rather than mechanical inputs. As such, a digital controller is enabled that is configured to provide analog outputs based on simulated mechanical systems, while eliminating the mechanical systems.

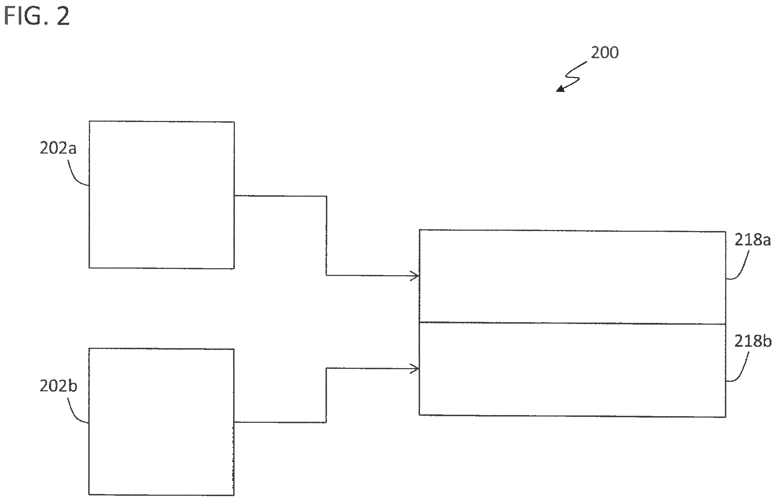

Turning now to FIG. 2, an example of a control system 200 is shown. Control system 200 is formed from two control computers 202a, 202b. A first control computer 202a and a second control computer 202b may be configured substantially similar to the control computer 102 of FIG. 1. The two control computers 202a, 202b may each output analog signals based on simulations of LVDTs, RVDTs, or resolvers, and supply the analog output signals to a first FADEC 218a and a second FADEC 218b, respectively. The duplicate systems, i.e., the first control computer 202a and the first FADEC 218a and the second control computer 202b and the second FADEC 218b, are configured as redundant systems, thus ensuring reliable operation and control of a vehicle.

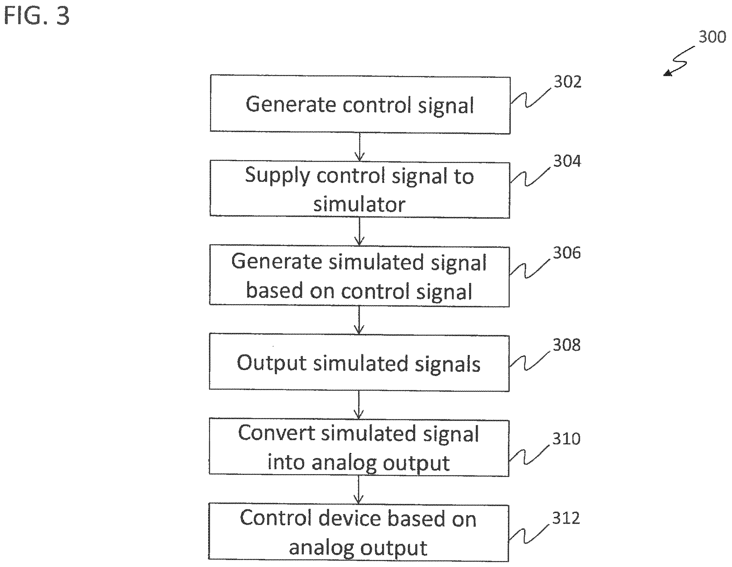

Turning now to FIG. 3, a process for controlling a control device in accordance with a non-limiting embodiment of the present disclosure is shown. Control process 300 may be employed by a control system or computer that is configured to control a control device, such as a throttle, a control surface, etc.

A control signal is generated at block 302. The control signal may be a signal that a control computer or processor outputs in response to a detected situation. For example, in an unmanned aircraft application, sensors on the aircraft may detect that thrust must be increased by opening a throttle or the control computer or system may receive an input from a remote user, such as a UAV operator instructing for an increase in thrust of the aircraft.

The control signal will be sent to or supplied to a simulator at block 304. That is, in response to the control signal, a simulation of a mechanical actuation is performed. Thus, at block 306, a simulated signal is generated. The simulated signal may be one or more signals that are digital signals that simulate or represent analog or mechanical inputs related to the action to be taken or instructed at block 302. For example, a first simulated signal may be generated to represent a ratio or percentage that would have been measured at a first coil of an LVDT, RVDT, or resolver and a second simulated signal may be generated to represent a ratio or percentage that would have been measured at a second coil of an LVDT, RVDT, or resolver. The two signals, in digital format, may be provided or output to respective digital-to-analog converters at block 308.

The simulated signal is then converted to an analog signal at block 310, and subsequently provided to a control device or other device to control the control device, as shown at block 312. That is, the simulated signal in digital format is converted to an analog signal that may be interpreted and used to control a vehicle in line with the instruction or action to be taken at block 302.

Accordingly, the process 300 may be used to control a vehicle without an analog or mechanical input, but rather uses simulated signals that represent the analog or mechanical input and yet outputs an analog signal.

Advantageously, embodiments described herein provide a control system for operating a portion of a vehicle using simulated signals. That is, a mechanical or analog input device may be replaced with digital simulated signals while still providing an analog output. Thus, advantageously, in some embodiments, vehicles that previously employed mechanical or analog inputs may be retrofitted with control systems that are configured to work with existing control devices, thus eliminating the need to completely redesign a control system.

For example, in one example, a pilot's input device may be replaced by software or firmware installed on a processor of a control system. The software or firmware may output digital signals that are sent to an integrated circuit. The integrated circuit will then output digital signals that are substantially similar to the signals that would be output by a mechanical or analog input device. These signals may be converted to analog signals and be used to control a portion of a vehicle.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

For example, although described herein with respect to an LVDT, RVDT, or resolver as an analog position displacement device, those of skill in the art will appreciate that the simulated signals generated in accordance with the above embodiments may be used to represent any type of position displacement device or mechanism. Further, various embodiments described herein are directed to throttle control on an aircraft. However, those of skill in the art will appreciate that this is merely for illustrative and explanatory purposes and other types of vehicles and/or control devices may controlled by the processes described herein. Thus, for example, simulated signals related to flap or valve operation that has previously been operated based on a mechanical or analog input may be replaced by a digital configuration as described herein.

Accordingly, the present disclosure is not to be seen as limited by the foregoing description, but is only limited by the scope of the appended claims.

## Claims

1. A method for controlling a vehicle comprising:
generating a digital control signal;
generating a digital simulated signal based on the control signal, the digital simulated signal simulating one of a mechanical or analog input signal;
converting the digital simulated signal into an analog signal; and
controlling a control device of the vehicle using the analog signal.

2. The method of claim 1, further comprising transmitting the analog signal to a FADEC (218).

3. The method of any of the preceding claims, wherein the control device is a throttle of an aircraft.

4. The method of any of the preceding claims, wherein the digital simulated signal comprises a first simulated signal and a second simulated signal.

5. The method of claim 4, wherein the first simulated signal (114) is a simulated signal of a first coil of an LVDT, RVDT, or resolver and the second simulated signal (116) is a simulated signal of a second coil of the LVDT, RVDT, or resolver.

6. A control system configured to control a control device of a vehicle, the control system comprising:
a processor (104) configured to output a control signal; and
a simulator (106) configured to convert the control signal to a simulated signal, the simulated signal simulating one of a mechanical or analog input signal,
wherein the simulated signal is used to control the control device of the vehicle.

7. The control system of claim 6, wherein the simulator comprises an integrated circuit (108) for converting the control signal into a digital simulated signal and at least one digital-to-analog converter (112) configured to convert digital simulated signal into an analog signal.

8. The control system of any of claims 6-7, wherein the processor and the simulator are part of a flight control computer or vehicle management system.

9. The control system of any of claims 6-8, further comprising a FADEC (218) configured to receive the simulated signal from the simulator.

10. The control system of any of claims 6-9, wherein the control device is a throttle of an aircraft.

11. The control system of any of claims 6-10, wherein the simulated signal comprises a first simulated signal (114) and a second simulated signal (116).

12. The control system of claim 11, wherein the first simulated signal is a simulated signal of a first coil of an LVDT, RVDT, or resolver and the second simulated signal is a simulated signal of a second coil of the LVDT, RVDT, or resolver.
